# EUROPÄISCHE PATENTSCHRIFT

(11) **EP 1 651 881 B1**
(45) Veröffentlichungstag und Bekanntmachung des Hinweises auf die Patenterteilung: **17.10.2007**
(21) Anmeldenummer: 04762557.9
(22) Anmeldetag: 30.07.2004
(51) Int. Cl.: F16D 65/14, F16D 63/00, F16D 49/00

(54) **KLEMM- UND/ODER BREMSVORRICHTUNG**
CLAMPING AND/OR BRAKING DEVICE
DISPOSITIF DE SERRAGE ET/OU DE FREINAGE

(30) Priorität: 05.08.2003 DE 10335795
(43) Veröffentlichungstag der Anmeldung: 03.05.2006
(73) Patentinhaber: Hofmann, Klaus, 85567 Pienzenau (DE)
(72) Erfinder: Hofmann, Klaus, 85567 Pienzenau (DE)
(74) Vertreter: Eder, Thomas
(86) Internationale Anmeldenummer: PCT/DE2004/001712
(87) Internationale Veröffentlichungsnummer: WO 2005/015047

(56) Entgegenhaltungen:
- WO-A-01/34990
- US-A- 3 663 027
- US-A- 4 543 877
- US-A- 5 431 089

## Beschreibung

Die Erfindung betrifft eine Klemm- und/oder Bremsvorrichtung mit den Merkmalen des Oberbegriffs des Patentanspruchs 1.

Klemm- oder Bremsvorrichtungen sind in den verschiedensten Ausführungsformen für die verschiedensten Anwendungsfälle bekannt. So ist in der EP-A-0 936 366 eine Bremsvorrichtung für eine Linearführung bekannt, welche einen Tragkörper aufweist, der längs einer Führungsschiene verfahrbar ist. Der Tragkörper weist Bremsbacken auf, die auf die beiden Längsseiten einwirken. Der Tragkörper ist H-förmig ausgebildet und weist einen dünnen elastisch biegsamen Steg und zwei untere Schenkel auf, mit welchen er die Führungsschiene umgreift. Zwischen jeweils einem unteren Schenkel und der Führungsschiene ist eine Bremsbacke angeordnet. Der Tragkörper ist mit zwei oberen Schenkeln versehen, die gemeinsam mit dem Steg einen Aufnahmeraum bilden, in welchem ein auf die oberen Schenkel einwirkendes krafterzeugendes Mittel vorgesehen ist. Hierbei kann es sich um eine hydraulisch oder pneumatisch betätigbare Kniehebelmechanik oder einen Piezoaktuator handeln. Des Weiteren kann als Kraftwandler ein hydraulisch oder pneumatisch betätigbarer Keilschieber vorgesehen sein, der in einem hierzu sich in Längsrichtung der Bremsvorrichtung verjüngend ausgebildeten Raum zwischen den oberen Schenkeln des Tragkörpers geführt ist. In allen Fällen erfolgt durch die Kraftbeaufschlagung der beiden oberen Schenkel ein Biegen des elastischen Stegs, so dass die beiden unteren Schenkel mit den Bremsbacken nach innen bewegt werden bzw. die Führungsschiene mit einer größeren Kraft beaufschlagen.

Nachteilig bei dieser bekannten Bremsvorrichtung in Verbindung mit dem Einsatz eines elektromechanischer Wandlers, beispielsweise eines Piezoelements, ist insbesondere dessen Empfindlichkeit gegenüber Erschütterungen oder anderweitige mechanische Belastungen.

Der Einsatz einer Kniehebelmechanik oder eines Keilschiebers bedeutet ebenso wie ein elektromechanischer Wandler einen hohen Montage- bzw. Herstellungsaufwand.

Zudem besteht insbesondere bei Klemmvorrichtungen die Forderung nach ausreichend hohen Klemmkräften, die sich bei bekannten Vorrichtungen nur mit einem relativ hohen konstruktiven und damit finanziellen Aufwand realisieren lassen.

Aus der US 5,855,446 ist eine hydraulische Klemmbuchse bekannt, welche an einer Welle ausgerichtet und mit ihr bspw. drehfest verbunden werden kann. Die Buchse weist einen im Wesentlichen stabilen Buchsenkörper auf, der in einem Abstand um eine Antriebswelle angeordnet ist. An diesen Buchsenkörper angrenzend und der Welle zugewandt ist eine mit Druck beaufschlagbare Kammer vorgesehen. Eine sich im wesentlichen parallel zur Welle erstreckende Seitenwand dieser Kammer dient hier gleichzeitig als Bremselement, welches bei Druckbeaufschlagung der Kammer durch die Expansion der Kammer gegen die Welle gedrückt wird, um so eine reibschlüssige Verbindung herzustellen. Durch eine Σ-förmige Ausbildung der seitlich angrenzenden Wände der Kammer soll verhindert werden, dass sich die Buchse bei Druckbeaufschlagung der Kammer schief zur Welle ausrichtet. Die Σ-förmigen Seitenwände der Kammer ermöglichen im Beaufschlagungsfall eine Ausdehnung dieser Seitenwände in radialer Richtung auf die Welle zu, noch bevor der zunehmende Kammerdruck auch die parallel zur Welle verlaufende Kammerwand gegen die Welle presst. So kann sich die Buchse rechtwinklig zur Wellenachse ausrichten, bevor die drehfeste Verbindung erzeugt wird.

Diese Klemmvorrichtung weist keine günstige Kräfteübersetzung für die Erzeugung hoher Anpresskräfte auf. Ferner ist die Kammer in ihrer Gestalt und insbesondere in ihrer Anordnungsmöglichkeit relativ zum Buchsenkörper eingeschränkt. Bremswirkung kann hier nur durch Beaufschlagung mit Überdruck erzielt werden, und das eigentliche Bremselement, welches gegebenenfalls hohe Antriebskräfte übertragen muss, ist nicht fest mit dem Buchsenkörper verbunden, sondern nur über die erzwungenerweise relativ instabile Druckkammer.

Aus der WO 01/34990 A1 der Anmelderin ist eine Klemm- und/oder Bremsvorrichtung bekannt, bei der an einem Grundkörper eine mit Druck beaufschlagbare Kammer vorgesehen ist, die zumindest in einem Teilbereich von wenigstens einer biegbaren aber zug- und/oder druckfesten Wandung begrenzt ist. Die der Wandung gegenüberliegende Begrenzung der Kammer kann ebenfalls wie die erste Wandung ausgeführt sein. Sie kann aber auch starrer Teil eines Körpers sein. Bevorzugt liegen die Wandungen in einem verhältnismäßig geringen Abstand. Die aus der Verformung der Kammer resultierenden Kräfte werden mindestens zum Teil in Richtung bzw. entlang der Wandung geleitet und im Bereich der Verbindung der Wandung mit einem Grundkörper in diesen eingeleitet. Wählt man den Angriffspunkt solcher Kräfte an dem Grundkörper geeignet aus, und ist dieser Grundkörper wenigstens teilweise elastisch verformbar, so können die Kräfte über diesen Grundkörper an andere Stellen des Grundkörpers, bspw. in Klemm- oder Bremsbereiche übertragen werden. Ein entsprechendes Brems- oder Klemmmittel in diesen Bereichen kann dann mittels der Kräfte in eine Beaufschlagungsposition hinein oder aus dieser heraus bewegt werden, um ein Führungselement oder ein zu klemmendes oder zu bremsendes Element zu bremsen oder freizugeben. Dabei kann sowohl aufgebrachter Über- als auch Unterdruck in der Kammer genutzt werden, um sowohl Zug- als auch Druckkräfte in den Grundkörper einzuleiten. Selbstverständlich können die Klemm- und/ oder Bremsbereiche vor und nach der Krafteinleitung noch in Eingriff mit dem Führungselement oder dem zu klemmenden oder zu bremsenden Element stehen, wobei sich jedoch Änderungen der Beaufschlagungskräfte zwischen den Klemm- und/oder Bremsbereichen und dem jeweils anderen Element ergeben.

Diese bekannte Klemm- und/oder Bremsvorrichtung geht von der Erkenntnis aus, dass eine geeignete Kammer bei Beaufschlagung mit Unter- oder Überdruck eine Verformung anstrebt. Wird diese Kammer zu einem großen Teil von wenigstens einer annähernd ebenen Wandung gebildet, so verursacht Über- oder Unterdruck in der Kammer zunächst eine Verformung in eine erste Richtung, welche im Wesentlichen senkrecht zu dieser Wandung verläuft. Um der Verformung (Expansion oder Kontraktion) in dieser ersten Richtung nachzugeben resultiert, daraus entsprechend umgekehrt eine Kontraktion oder Expansion der Kammer in eine im Allgemeinen senkrecht zur ersten Richtung (also im Wesentlichen parallel zu der Wandung) verlaufende zweite Richtung. Dabei wird die Tatsache genutzt, dass geringe Kräfte bzw. Verformungen in der ersten Richtung große Kräfte in der zweiten Richtung erzeugen, die zum Bremsen bzw. Klemmen oder zum Lösen vorgespannter Klemm- bzw. Bremsvorrichtungen genutzt werden können.

Eine weitere, die Merkmale des Oberbegriffs des Patentanspruchs 1 aufweisende Klemmvorrichtung ist aus US 3 663 027 bekannt.

Ausgehend von diesem Stand der Technik liegt der Erfindung die Aufgabe zugrunde, eine Klemm- und/oder Bremsvorrichtung zu schaffen, welche mit geringerem konstruktiven Aufwand herstellbar ist und mit welcher auf einfache Weise ausreichend hohe Brems- bzw. Klemmkräfte erzeugt werden können.

Die Erfindung löst diese Aufgabe mit den Merkmalen des Patentanspruchs 1.

Die Erfindung geht von der Erkenntnis aus, dass mittels wenigstens eines ringförmigen, plattenförmigen Elements, welches in einem Gehäuse angeordnet ist und einen konvexen Biegebereich aufweist, auf einfache und kostengünstige Weise eine Klemm- und/oder Bremsvorrichtung herstellbar ist, die auch mittels eines nur gasförmigen Druckmediums, also auf pneumatische Weise, sehr hohe Klemm- und/oder Bremskräfte erzeugen kann. Selbstverständlich ist jedoch auch eine hydraulische Betätigung der Vorrichtung möglich. Die Funktion der Vorrichtung wird durch die konvexe Ausbildung wenigstens eines Biegebereichs des ringförmigen, plattenförmigen Elements gewährleistet, welcher an seiner konvexen Seite von einem Überdruck eines Druckmediums beaufschlagt wird, wobei an der konvex nach außen gewölbten Seite des Biegebereichs ein entsprechender Druckraum vorgesehen ist. Bei einer Druckbeaufschlagung des Biegebereichs wird dessen Krümmung verringert, so dass sich die Ausdehnung des plattenförmigen Elements zwischen zwei Enden vergrößert, von denen sich eines am Gehäuse abstützt und das andere das zu klemmende oder bremsende Objekt unmittelbar oder mittelbar über ein Beaufschlagungselement beaufschlagt. Das plattenförmige Element ist dabei so druckfest und im zumindest einen Biegebereich so elastisch biegbar ausgebildet, dass zwischen den beiden Enden ein federndes Element entsteht. Die Druckfestigkeit des plattenförmigen Elements muss dabei so gestaltet sein, dass bei Ausüben einer vorbestimmten, maximal zulässigen Kraft auf das zweite Ende (Beaufschlagungsende) kein Ausknicken erfolgt.

Selbstverständlich muss auf der konkaven, der Druckbeaufschlagungsseite abgewandten Seite des Biegebereichs ein entsprechender Freiraum vorhanden sein, der ein ausreichendes Biegen des Biegebereichs ermöglicht. Dieser Freiraum kann mit der Umgebung, d.h. mit dem Luftdruck der Umgebung in Verbindung stehen. Er kann jedoch auch dicht abgeschlossen sein, so dass das Biegen des Biegebereichs gegen einen zunehmenden Druck im Freiraum erfolgen muss.

Bei diesen Ausführungsformen ist es, anders als bei der bekannten Vorrichtung der Anmelderin, möglich, Klemm- und/oder Bremskräfte zu erzeugen oder zu verändern, ohne dass hierzu ein im Wesentlichen starrer Körper deformiert werden müsste. Hierdurch ergibt sich neben einer einfachen Konstruktion eine geringe Baugröße. Die Vorrichtung ist zudem einfach herstellbar, da lediglich das plattenförmige Element in das Gehäuse eingesetzt werden muss.

Anders als bei bekannten Klemmbüchsen, die relativ weiche Wandungen aufweisen, und die lediglich bei Beaufschlagung mittels Überdruck den Abstand zwischen einem Beaufschlagungselement und einem Basiselement vergrößern, ist es mit der erfindungsgemäßen Vorrichtung auch möglich, bereits im drucklosen Zustand bei einer entsprechenden vorgespannten Montage der Vorrichtung in einer Gesamtvorrichtung eine vorbestimmte Klemm- und/oder Bremskraft zu erzeugen, mit welcher das zu klemmende oder zu bremsende Objekt beaufschlagt wird. Durch die Beaufschlagung mit Überdruck können die auf das Objekt übertragenen Kräfte erhöht werden. Hierdurch ist z.B. ein Ansteuern der Vorrichtung derart möglich, dass ein Wechsel zwischen einer (im drucklosen Zustand) gebremsten Bewegung des beaufschlagten Objekts und einem vollständigen Klemmen des Objekts (bei einer ausreichenden Druckbeaufschlagung) erfolgt.

Die häufigere Verwendung der erfindungsgemäßen Vorrichtung wird jedoch die sein, dass im drucklosen Ausgangszustand das Objekt unbeaufschlagt ist und bei einer Druckbeaufschlagung der Vorrichtung gebremst bzw. geklemmt wird.

Bei einer linear funktionierenden Klemm- und/oder Bremsvorrichtung kann das zumindest eine plattenförmige Element was jedoch nicht Gegenstand der vorliegenden Erfindung ist eine z.B. rechteckige Form aufweisen, wobei das gesamte Element zwischen zwei Kanten konvex gekrümmt sein kann. Das erste und zweite Ende wird dann durch diejenigen Kanten bzw. Endbereiche gebildet, zwischen denen die Krümmung verläuft. Die seitlichen Kanten müssen, zumindest im Bereich des Biegebereichs (wenn nicht das gesamte plattenförmige Element gebogen ist) im Wesentlichen gegenüber dem Gehäuse abgedichtet sein (eine geringe Leckage kann ggf. toleriert werden, z.B. wenn als Druckmedium Druckluft verwendet wird und der erforderliche Druck trotz der Leckage erreicht und aufrecht erhalten werden kann).

Nach einer Ausgestaltung der Erfindung ist ein Beaufschlagungselement vorgesehen, welches einstückig mit dem Gehäuse und als Teil des Gehäuses ausgebildet ist oder welches als ein lösbar mit dem Gehäuse verbundenes Teil ausgebildet ist, wobei das Beaufschlagungselement derart flexibel ausgebildet ist, dass bei einer Druckbeaufschlagung des Druckraums eine Bewegung wenigstens eines Abschnitts des Beaufschlagungselements in Richtung auf das Objekt erfolgt oder die durch das zumindest eine plattenförmige Element erzeugten übertragbaren Klemm- und/oder Bremskräfte auf das Objekt übertragen werden. Mit einem derart flexiblen Beaufschlagungselement kann der Druckraum gegenüber dem zumindest einen plattenförmigen Element auf einfache Weise abgedichtet werden, nämlich an der Beaufschlagungskante bzw. dem zweiten Ende des plattenförmigen Elements gegenüber dem Beaufschlagungselement. Grundsätzlich kann jedoch auch ein nicht mit dem Gehäuse verbundenes Beaufschlagungselement verwendet werden, das z.B. zur Verteilung der Anpresskraft auf eine größere Fläche entsprechend groß ausgebildet sein kann. Zudem kann das Beaufschlagungselement dazu dienen, um die (dann am Beaufschlagungselement ausgebildete) Anpressfläche an die Form des Objekts anzupassen.

In einer Ausgestaltung der Erfindung kann das erste Ende des zumindest einen plattenförmigen Elements mit dem Gehäuse verbunden sein, insbesondere dann, wenn bei der Realisierung einer linear wirkenden Klemm- und/oder Bremsvorrichtung ein nicht mit dem Gehäuse verbundenes Beaufschlagungselement zum Einsatz kommt oder das Objekt unmittelbar vom zweiten Ende des zumindest einen plattenförmigen Elements beaufschlagt wird.

Bei der bevorzugten Ausführungsform der Erfindung stützt sich das erste Ende des zumindest einen plattenförmigen Teils jedoch ohne feste Verbindung gegen das Gehäuse ab. Bei Vorhandensein eines Beaufschlagungselements stützt sich vorzugsweise auch das zweite Ende des zumindest einen plattenförmigen Teils ohne feste Verbindung gegen das Beaufschlagungselement ab. Hierdurch ergibt sich eine einfache Montage der Vorrichtung.

Erfindungsgemäß ist das zumindest eine plattenförmige Element ringförmig, vorzugsweise kreisringförmig, ausgebildet, um eine Vorrichtung zu schaffen, welche das Klemmen von stab- oder stangenförmigen Objekten, insbesondere im Querschnitt kreiszylindrischen Objekten ermöglicht.

Das ringförmige plattenförmige Element kann im Ausgangszustand über im Wesentlichen den gesamten radialen Querschnitt konvex ausgebildet sein, wobei im Wesentlichen die gesamte ringförmige Wandung des ringförmigen plattenförmigen Elements als Biegebereich dient. Ein derartiges plattenförmiges Element ist sehr einfach und kostengünstig herstellbar und kann auch für eine Vielzahl von Varianten verwendet werden.

Das wenigstens eine ringförmige, plattenförmige Element weist radiale Schlitze auf, welche nach innen bzw. außen offen sind, wobei das zweite Ende, d.h. das Beaufschlagungsende des ringförmigen, plattenförmigen Elements durch das innere bzw. äußere Ende des ringförmigen, plattenförmigen Elements gebildet ist. Die Schlitze reichen vorzugsweise bis knapp an das jeweils gegenüberliegende Ende des Rings und sind in einer solchen Anzahl vorhanden, dass sich, ausgehend von dem geschlossenen Ringbereich, einzelne Abschnitte nach innen bzw. außen erstrecken. Diese Abschnitte reduzieren die erforderliche Deformation des Rings in azimuthaler Richtung, wenn die Krümmung des konvexen Biegebereichs bei Druckbeaufschlagung reduziert wird.

Bei derart geschlitzten ringförmigen, plattenförmigen Elementen sind an den in Bezug auf den Druckraum inneren und/oder äußeren Oberflächen der plattenförmigen Elemente zumindest im Bereich der Schlitze ein oder mehrere Dichtelemente vorgesehen, vorzugsweise in Form einer flexiblen Schicht auf einem Teil oder auf der gesamten Oberfläche des plattenförmigen Elements. Hierdurch kann für die einzelnen Abschnitte zwischen den Schlitzen ein gemeinsamer Druckraum verwendet werden. Die Abdichtung der Schlitze kann beispielsweise durch Aufvulkanisieren einer relativ harten, aber dennoch ausreichend flexiblen Gummischicht erfolgen. Eine derartige Schicht kann sogar an der der Druckbeaufschlagung abgewandten Seite des ringförmigen, plattenförmigen Elements erfolgen, ohne dass die Gefahr besteht, dass sich die Schicht bei einer Druckbeaufschlagung ablöst.

Bei den bevorzugten Ausführungsformen der Erfindung wird die Biegung des zumindest einen Biegebereichs des zumindest einen plattenförmigen Elements derart begrenzt ist, dass nach einem Wegfall der Beaufschlagung des Druckraums mit Überdruck infolge der federnden Wirkung des zumindest einen Biegebereichs dieser in den Ausgangszustand zurückkehrt. Als Ausgangszustand sei dabei der drucklose Zustand bezeichnet, wobei auch in diesem Zustand, je nach Dimensionierung oder Montage der Klemm- und/oder Bremsvorrichtung der zumindest eine Biegebereich vorgespannt sein kann. Ein entsprechender Anschlag für den Biegebereich kann beispielsweise durch eine Gehäuseinnenwandung gebildet werden.

Nach einer Ausgestaltung der Erfindung können mehrere, im Wesentlichen parallel zueinander angeordnete plattenförmige Elemente vorgesehen sein, deren zweite Enden einen vorbestimmten Abstand aufweisen, um über einen vorgegebenen ausgedehnten Bereich Klemm- und/oder Bremskräfte auf das Objekt zu übertragen, wobei für jedes plattenförmige Element ein separater Druckraum oder für jeweils mehrere oder alle plattenförmige Elemente ein gemeinsamer Druckraum ausgebildet sein kann.

Bei der Verwendung mehrerer plattenförmiger Elemente kann wenigstens ein Paar plattenförmiger Elemente vorgesehen sein, deren erste und zweite Enden unmittelbar benachbart oder eng beabstandet sind und deren konvexe Biegebereiche jeweils konvex nach außen bezogen auf das jeweils andere plattenförmige Element des Paares plattenförmiger Elemente verlaufen, wobei ein gemeinsamer Druckraum zur Beaufschlagung der Biegebereiche der beiden plattenförmigen Elemente eines Paares vorgesehen ist. Diese Variante bietet den Vorteil, dass die beiden plattenförmigen Elemente bei einer Druckbeaufschlagung aneinander gepresst werden und so der zwischen den beiden Elementen erforderliche Raum mit geringerem Druck auf einfache Weise abgedichtet werden kann. Beispielsweise kann die vorstehend erwähnte Gummibeschichtung innen vorgesehen sein bzw. ein mit den inneren Oberflächen der plattenförmigen Elemente verbundenes Dichtelement sein.

Zudem können die plattenförmigen Elemente eines Paares so ausgebildet sein, dass sie in einem Endzustand bei Beaufschlagung mit einem Überdruck, der größer oder gleich einem vorgegebenen Maximaldruck ist, mit wenigstens einem Teilbereich der einander zugewandten Seiten aneinander anliegen, wobei der Endzustand durch eine geeignete Ausbildung der Biegebereiche so definiert ist, dass aus dem Endzustand eine selbsttätige Rückkehr in den drucklosen Ausgangszustand erfolgt. Auf diese Weise dient jeweils ein plattenförmiges Element als Anschlag für den zumindest einen Biegebereich des jeweils anderen plattenförmigen Elements.

Nach einer Ausführungsform der Erfindung kann ein Beaufschlagungselement vorgesehen sein, welches im gesamten Bereich, in dem die mehreren plattenförmigen Elemente angreifen, starr ausgebildet ist. Hierdurch kann eine gleichmäßigere Übertragung der Klemm- und/oder Bremskräfte auf das Objekt erreicht werden.

Bei allen Ausführungsformen der Erfindung erfolgt jedoch die Erzeugung der Klemm- und/oder Bremskräfte ausschließlich oder zumindest weit überwiegend durch eine Druckbeaufschlagung und die hierdurch erzeugte Biegung und damit die Änderung der effektiven Ausdehnung der plattenförmigen Elemente zwischen den beiden Enden. Die gilt auch für den Fall, dass eine Fläche des Beaufschlagungselements ganz oder teilweise mit Druck beaufschlagt wird, wenn der oder die Biegebereiche der plattenförmigen Elemente mit Druck beaufschlagt werden. Die hierdurch erzeugten Kräfte, die mit den bei üblichen Klemmbüchsen entstehenden Kräften vergleichbar sind, können jedoch praktisch vernachlässigt werden.

In eine anderen, nicht unter den Schatzumfang der Ansprüche fallenden Ausführungsform können das Gehäuse und das Beaufschlagungselement als im Wesentlichen H-förmiger Körper ausgebildet sein, wobei das zumindest eine plattenförmige Element und der Druckraum zwischen den im Wesentlichen parallelen oberen Schenkeln des H-förmigen Körpers vorgesehen sind, wobei an den im Wesentlichen parallelen unteren Schenkeln des H-förmigen Körpers Klemm- und oder Bremsbereiche zur Übertragung der Klemm- und/oder Bremskräfte auf das Objekt vorgesehen sind und wobei der H-förmige Körper im Bereich des Mittelstegs und/oder der Verbindungsbereiche des Mittelstegs mit den Schenkeln des H elastisch deformierbar ist.

In ähnlicher Weise können das Gehäuse und das Beaufschlagungselement als im Wesentlichen U-förmiger Köper ausgebildet sein, wobei das zumindest eine plattenförmige Element und der Druckraum zwischen den im Wesentlichen parallelen Schenkeln des U-förmigen Körpers vorgesehen sind, wobei an den im Wesentlichen parallelen Schenkeln des H-förmigen Körpers Klemm- und oder Bremsbereiche zur Übertragung der Klemm- und/oder Bremskräfte auf das Objekt vorgesehen sind und wobei der U-förmige Körper im Bereich der Basis des U und/oder im Bereich der Schenkel des U elastisch deformierbar ist.

Weitere Ausführungsformen der Erfindung ergeben sich aus den Unteransprüchen.

Die Erfindung wird nachfolgend an Hand in der Zeichnung dargestellter Ausführungsbeispiele näher erläutert. In der Zeichnung zeigen
- Fig. 1: einen Längsschnitt (Fig. 1a) und eine Detailvergrößerung (Fig. 1b) einer ersten Ausführungsform einer Klemm- und/oder Bremsvorrichtung nach der Erfindung zur Beaufschlagung eines kreiszylindrischen Objekts unter Verwendung eines ringförmigen, plattenförmigen Elements;
- Fig. 2: eine Draufsicht auf das ringförmige, plattenförmige Element in Fig. 1 sowie eine Detailvergrößerung im Schnitt entlang der Linie A-A (Fig. 2b);
- Fig. 3: einen Längsschnitt (Fig. 3a) und eine Detailvergrößerung (Fig. 3b) einer zweiten Ausführungsform einer Klemm- und/oder Bremsvorrichtung nach der Erfindung zur Beaufschlagung eines kreiszylindrischen Objekts unter Verwendung mehrerer Paare von ringförmigen, plattenförmigen Elementen;
- Fig. 4: eine Detailvergrößerung einer dritten Ausführungsform einer Klemm- und/oder Bremsvorrichtung nach der Erfindung analog Fig. 3, jedoch unter Verwendung eines ringförmigen Beaufschlagungselements;
- Fig. 5: eine Detailvergrößerung einer vierten Ausführungsform einer Klemm- und/oder Bremsvorrichtung nach der Erfindung analog Fig. 4, jedoch unter Verwendung eines einstückig mit dem Gehäuse ausgebildeten Beaufschlagungselements und
- Fig. 6: einen schematischen Querschnitt durch eine Ausführungsform einer Klemm- und/oder Bremsvorrichtung zur Realisierung einer Linearführung.

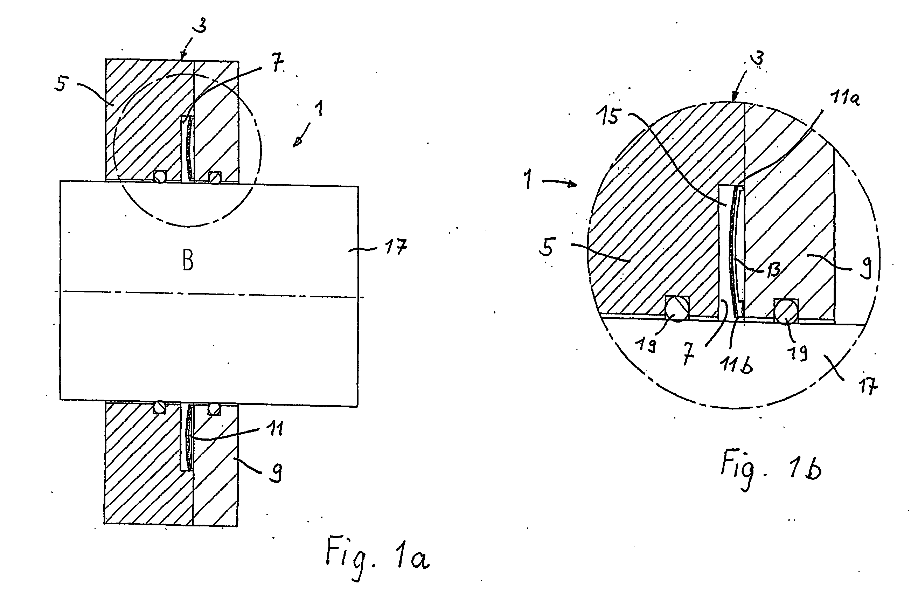

Die in Fig. 1 in einem schematischen Längsschnitt dargestellte Ausführungsform einer Klemm- und/oder Bremsvorrichtung 1 weist ein ringförmiges Gehäuse 3 auf, welches aus einem ersten Teil 5 mit einer ringförmigen Ausnehmung 7 und einem zweiten Teil 9 besteht, welches mit dem ersten Teil 5 verbunden, beispielsweise verschraubt ist. In der Ausnehmung 7 zwischen dem ersten und zweiten Gehäuseteil 5, 9 ist ein ringförmiges, plattenförmiges Element 11 angeordnet. Das ringförmige, plattenförmige Element 11 ist im radialen Schnitt leicht konvex ausgebildet und beaufschlagt mit seinem äußeren Ende bzw. seinem äußeren Rand 11 a die Umfangswandung der ringförmigen Ausnehmung 7 des ersten Gehäuseteils 5.

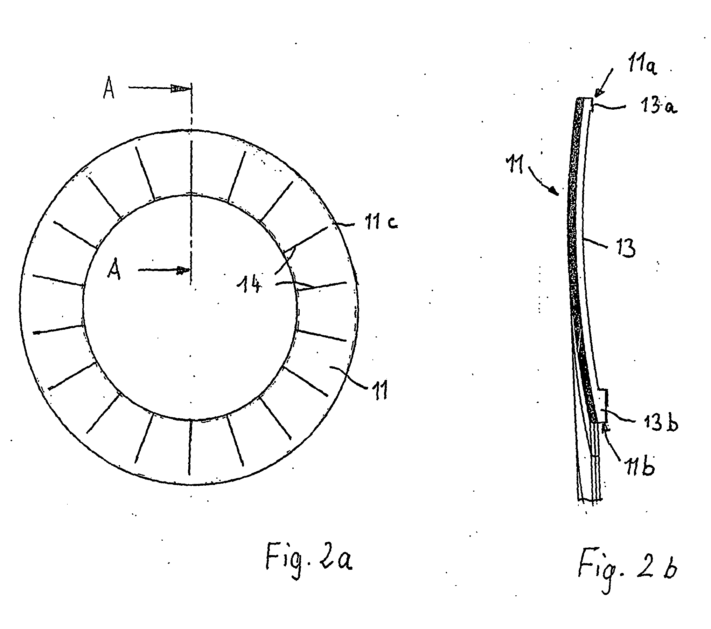

Wie aus Fig. 1b ersichtlich, kann das beispielsweise aus einem Stahlblech bestehende ringförmige, plattenförmige Element 11 auf einer Seite mit einem Dichtungselement 13, beispielsweise einem relativ harten, jedoch noch ausreichend flexiblen Gummiring, verbunden sein. Das ringförmige, plattenförmige Element 11 ist, wie in Fig. 2a und 2b dargestellt, mit einer Vielzahl von Schlitzen 14 versehen, die ausgehend von einem noch ringförmig geschlossenen äußeren Randbereich 11c radial einwärts verlaufen und nach innen offen sind.

Das ringförmige, plattenförmige Element 11 definiert zusammen mit dem Dichtelement 13 auf seiner konvexen Seite zusammen mit der inneren Wandung des ersten Gehäuseteils 7 einen Druckraum 15, welchem ein Druckmedium zuführbar ist, vorzugsweise Druckluft. Selbstverständlich kann jedoch auch ein flüssiges Druckmedium verwendet werden. Der Druckraum 15 ist bei der in Fig. 1 dargestellten Ausführungsform nach innen offen ausgebildet und muss gegenüber dem zu beaufschlagenden Objekt 17, beispielsweise einer rotierbaren Welle, abgedichtet werden. Dies kann mittels entsprechender Dichtelemente 19, die als O-Ringe ausgebildet sein können, erfolgen. Die O-Ringe 19 können jeweils in Nuten in den Innenwandungen des ersten und zweiten Gehäuseteils 5, 9 aufgenommen sein.

Das ringförmige, plattenförmige Element 11 liegt bei dem in Fig. 1 dargestellten Ausführungsbeispiel mit seinem äußeren und inneren Rand 11a, 11b an der Innenwandung des zweiten Gehäuseteils 9 an, wobei das Dichtelement den Raum zwischen der konkaven Oberfläche des Elements 11 und der Innenwandung des Gehäuseteils 9 ausreichend abdichtet. Hierzu kann am äußeren und inneren Rand jeweils ein Ringbereich 13a, 13b des Dichtelements ausgebildet sein. Der innere Ringbereich 13b kann dabei in seiner radialen Ausdehnung so weit ausgebildet sein, dass er zumindest mit einem Teilbereich über den gesamten Bewegungsweg des Element 11 an der Innenwandung des Gehäuseteils 9 anliegt. Der Raum zwischen der konkaven Seite des Elements 11 und dem Gehäuseteil 9 kann auch über einen oder mehrere (nicht dargestellte) Kanäle mit der Umgebung in Verbindung stehen.

Wird dem Druckraum 15 über einen oder mehrere (nicht dargestellte) Zuführkanäle das Druckmedium mit einem bestimmten Druck zugeführt, so biegt sich das ringförmige, plattenförmige Element 11 in Richtung auf das zweite Gehäuseteil 9, d.h., die Krümmung wird reduziert. Hierdurch werden die sich zwischen den Schlitzen 14 nach innen erstrechenden Abschnitte des Elements 11 mit ihrem inneren Rand 11b weiter nach innen in Richtung auf das Objekt 17 bewegt, so dass durch einen bestimmten Druck des Druckmediums eine gewünschte Brems- oder Klemmkraft auf das Objekt ausgeübt werden kann. Das Element 11 muss dabei selbstverständlich so dimensioniert sein und aus einem solchen Material bestehen, dass in zumindest in einem Biegebereich eine ausreichende Flexibilität gegeben ist und zudem das Element 11 insgesamt so druckfest ausgebildet ist, dass auch bei der maximalen erzeugbaren Klemm- oder Bremskraft, die auf das innere Ende des Elements 11 wirkt bzw. von diesem auf das Objekt 17 ausgeübt wird, kein Ausknicken des Elements 11 oder gar eine plastische Verformung erfolgt.

Die Innenwandung des zweiten Gehäuseteils 9 dient zusätzlich als Anschlag für das ringförmige, plattenförmige Element 11, so dass auch bei hohen Drücken kein Umspringen der konvexen Krümmung in eine konkave Krümmung erfolgen kann. Zudem können die Innenwandung des zweiten Gehäuseteils 9 und/oder das ringförmige, plattenförmige Element 1 bzw. das Dichtelement 13 so ausgebildet sein, dass die Krümmung des Elements 11 maximal so weit reduziert wird, dass bei nachlassendem Druck die federnde Wirkung des Elements 11 dafür sorgt, dass das Element 11 wieder in die Krümmung zurückkehrt, die im drucklosen-Ausgangszustand vorliegt. Hierzu kann die Innenwandung des Gehäuseteils 9 beispielsweise leicht konvex in Richtung auf das Element 11 ausgebildet sein oder es können ein oder mehrere Anschlagelemente an der Innenwandung des Gehäuseteils 9 oder am Element 1 bzw. am Dichtelement 13 vorgesehen sein.

An dieser Stelle sei bemerkt, dass das Dichtelement selbstverständlich auch auf der äußeren konvexen Seite des Elements 11 vorgesehen sein kann. In diesem Fall ist es auch möglich, ein loses, nicht mit dem Element 11 verbundenes Dichtelement zu verwenden, beispielsweise eine separate, ringförmige Dichtscheibe aus Gummi oder Kunststoff.

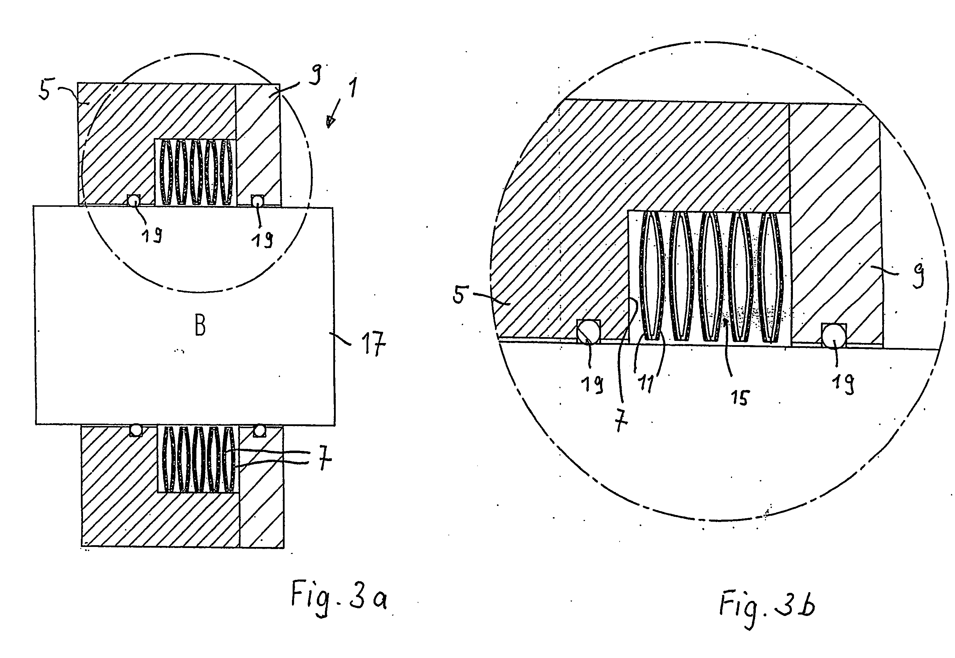

Die in Fig. 3 dargestellte Ausführungsform einer Klemm- und/oder Bremsvorrichtung ähnelt der Ausführungsform in Fig. 1. Anstelle eines einzigen ringförmigen, plattenförmigen Elements 11 sind bei dieser Ausführungsform jedoch insgesamt fünf Paare von ringförmigen, plattenförmigen Elementen 11 vorgesehen. Hierdurch kann bei gleichem Druck des Druckmediums die zehnfache Brems- oder Klemmkraft auf das Objekt 17 übertragen werden.

Die beiden ringförmigen, plattenförmigen Elemente 11 eines Paars sind dabei so angeordnet, dass sie sich jeweils mit den konkaven Seiten gegenüberstehen. Hierdurch entsteht auf einfache Weise zwischen jedem Paar von Elementen 11 jeweils ein gegenüber dem Druckraum 15, in welchem die gegeneinander abdichtenden Elemente 11 der Paare von Elementen angeordnet sind, abgedichteter Raum. Bei einer Beaufschlagung des Druckraums 15 mit dem Druck des Druckmediums werden die geschlitzten Wandungen der Elemente 11 daher aufeinander zu gebogen. Da sich die inneren Enden 11b der Elemente 11 eines Paares gemeinsam bewegen, ist auch eine Abdichtung des Raums zwischen den Elementen 1 mit einfachen Mitteln sicher zu erreichen. Die äußeren Ränder der Elemente 11 können zur Fixierung selbstverständlich auch durch geeignete Mittel im Gehäuse 3 gehalten sein, beispielsweise in Nuten in der Umfangswandung der zylindrischen Ausnehmung 7 des ersten Gehäuseteils 5. Die beiden Elemente 11 eines Paares können selbstverständlich auch miteinander verbunden, beispielsweise verklebt sein.

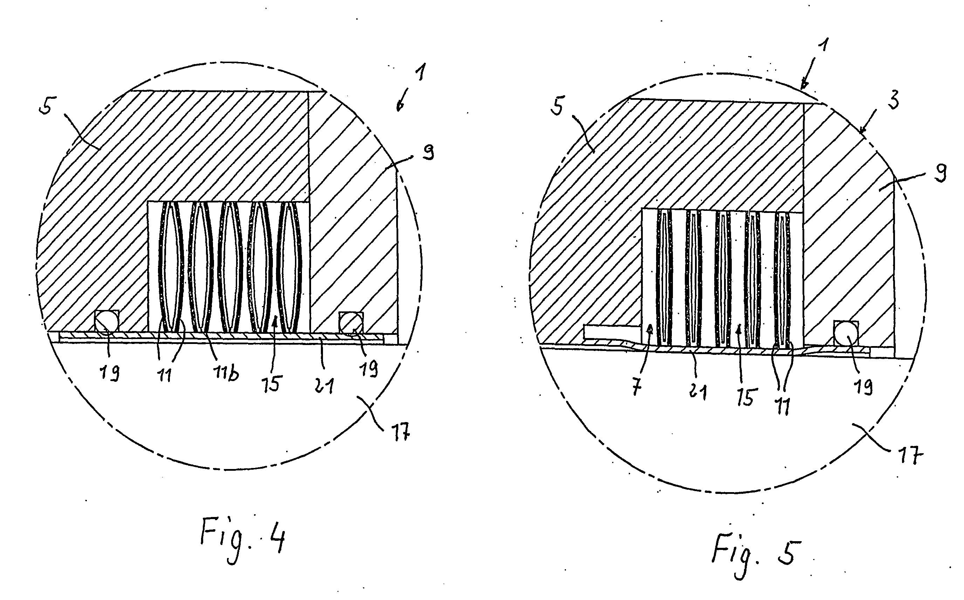

Die Ausführungsform einer Klemm- und/oder Bremsvorrichtung 1 nach Fig. 4 unterscheidet sich von der in Fig. 3 dargestellten Ausführungsform lediglich dadurch, dass die inneren Enden 11b der Elemente 11 das zu bremsende bzw. zu klemmende Objekt 17 nicht unmittelbar beaufschlagen, sondern über ein ringförmiges Beaufschlagungselement 21, welches innerhalb des Gehäuses 3 angeordnet ist. Das Beaufschlagungselement 21 wird durch die von den Paaren von ringförmigen, plattenförmigen Elementen 11 ausgeübten Kräfte so deformiert, insbesondere der Innendurchmesser des Beaufschlagungselements 21 reduziert, dass die Kräfte zumindest teilweise auf das Objekt 17 übertragen werden.

Diese Ausführungsform bietet den Vorteil, dass die Abdichtung des Druckraums 15 zwischen dem Gehäuse und dem Beaufschlagungselement 21 erfolgen kann, beispielsweise wieder über Dichtelemente 19 in Form von O-Ringen.

Wie aus Fig. 5 ersichtlich, in der eine weitere Ausführungsform einer Klemm- und/oder Bremsvorrichtung dargestellt ist, kann anstelle eines separaten Beaufschlagungselements auch ein mit dem Gehäuse 3 integriert ausgebildetes Beaufschlagungselement 21 vorgesehen sein. Im dargestellten Fall ist die Ausnehmung 7 im ersten Gehäuseteil 5 so gestaltet, dass eine dünne innere Wandung entsteht, welche das Beaufschlagungselement 21 bildet. Die Wandung muss so dünn sein, dass eine ausreichende Deformation bei Ausüben der Kräfte durch die Paare von ringförmigen, plattenförmigen Elementen 11 und damit eine ausreichende Übertragung dieser Kräfte auf das Objekt 17 gewährleistet werden kann. Die Abdichtung des Druckraums 15 kann hier dadurch erfolgen, dass die dünnen Wandung bzw. das Beaufschlagungselement 21 mit dem zweiten Gehäuseteil 9 im Wesentlichen dicht verbunden wird. Zur Abdichtung kann wieder ein Dichtelement 19, beispielsweise in Form eines O-Rings eingesetzt werden.

Selbstverständlich kann eine derartige Klemm- und/oder Bremsvorrichtung auch so gestaltet werden, dass die entsprechenden Kräfte nur an einer punktförmigen, linienförmigen oder nicht ringförmig geschlossenen Fläche auf ein Objekt übertragen werden, beispielsweise zu Herstellung einer Klemm- und/oder Bremsvorrichtung für eine Linearführung.

Interpretiert man die Darstellung in Fig. 5 nicht, wie es der Erfindung entspricht, als Ausschnitt aus einer im Wesentlichen rotationssymmetrischen Darstellung, sondern als Ausschnitt aus einer Darstellung mit einem (beispielsweise rechteckigen) Gehäuse 3, in welchem rechteckige, plattenförmige Elemente 11 angeordnet sind, so entsteht eine Klemm- und/oder Bremsvorrichtung zur Beaufschlagung der Oberfläche eine Objekts 17, bei dem es sich beispielsweise um eine Schiene einer Linearführung handeln kann. Das Gehäuse 3 kann beispielsweise auf einem nicht näher dargestellten Schlitten montiert sein, der mittels des als Schiene ausgebildeten Objekts 17 geführt ist. Der Schlitten kann die Schiene umgreifen, so dass das Ausüben auch hoher Kräfte auf die Oberfläche des Objekts möglich ist, ohne dass der Schlitten von der Schiene abgehoben wird. Die Funktionsweise der beispielsweise rechteckigen, plattenförmigen Elemente ergibt sich analog zu den vorstehenden Ausführungen im Zusammenhang mit den ringförmigen, plattenförmigen Elementen.

Wird bei einer derartigen Ausführungsform kein Beaufschlagungselement 21 verwendet, so können die plattenförmigen Elemente 1 mit ihren inneren Enden 11 a im Gehäuse gehalten oder mit diesem fest (einstückig oder lösbar) verbunden sein. Selbstverständlich muss dann wieder eine Abdichtung des Druckraums 15 gegenüber dem Objekt 17 erfolgen. Die seitlichen Kanten oder Bereiche der rechteckigen plattenförmigen Elemente müssen zur Schaffung eines Druckraums bzw. eines "drucklosen" Raums zwischen den Paaren von plattenförmigen Elementen ebenfalls abgedichtet sein.

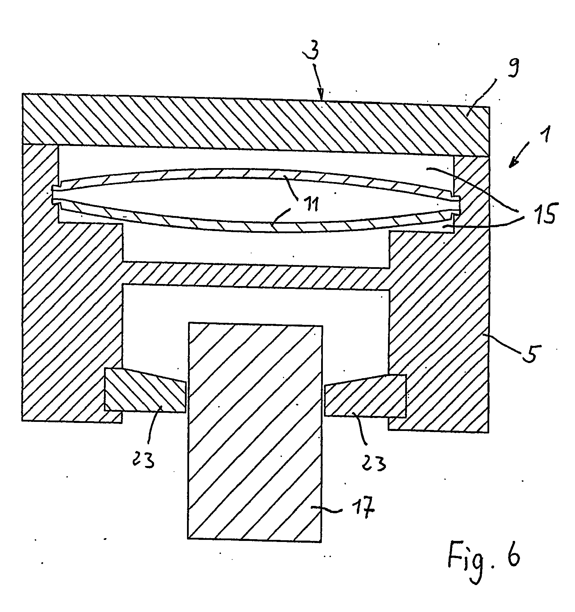

Auch bei der Ausführungsform nach Fig. 6 handelt es sich um eine nicht erfindungsgemäße Version einer Klemm- und/oder Bremsvorrichtung 1, mit der eine Linearführung realisiert werden kann. Das erste Gehäuseteil 5 ist in diesem Fall mit einem H-förmigen Querschnitt ausgebildet, wobei zwischen den oberen Schenkeln des H ein Paar beispielsweise rechteckförmiger, plattenförmiger Elemente 11 vorgesehen ist. Da derartige Elemente 11 nicht mit Schlitzen versehen werden müssen, kann selbstverständlich auch auf entsprechende Dichtelemente verzichtet werden. Der Druckraum 15 ist wiederum außerhalb des Paares der plattenförmigen Elemente 11 gebildet.

Bei einer Druckbeaufschlagung des Druckraums 15 wird eine Deformation des H-förmigen Gehäuseteils 5 erzeugt, insbesondere im Bereich des mittleren Stegs des H und der Übergangsbereiche zwischen dem Steg und den seitlichen Schenkeln des H. Hierdurch werden die starr ausgebildeten unteren Schenkel des H einwärts in Richtung auf das dazwischen angeordnete Objekt 17 bewegt und entsprechende Brems- oder Klemmkräfte auf dieses übertragen. Hierzu können an den Innenseiten der unteren Schenkel des H Klemm- und/oder Bremsbacken 23 vorgesehen sein.

Wird anstelle eines H-förmigen Gehäuseteils 5 ein U-förmiges Gehäuse verwendet, bei dem zwischen den Schenkeln des U eine oder mehrere (beispielsweise rechteckförmige) plattenförmige Elemente vorgesehen sind, welche die Schenkel des U bei einer Druckbeaufschlagung nach außen drücken, so kann ein "aktives Lösen" eines Objekt, beispielsweise bei einer Linearführung, realisiert werden. Selbstverständlich kann dies auch bei einem H-förmigen Gehäuse dadurch erreicht werden, dass die Bremsbacken an den Außenseiten der unteren Schenkel des H angeordnet werden und diese das Objekt beispielsweise in einer Nut beaufschlagen. Umgekehrt kann auch mit einem U-förmigen Gehäuse ein "aktives Klemmen oder Bremsen" erzeugt werden, wenn die Bremsbacken an den Außenseiten der Schenkel des U angeordnet werden und das Objekt entsprechend beaufschlagen.

Abschließend sei darauf hingewiesen, dass selbstverständlich auch einzelne Merkmale, die vorstehend nur in Verbindung mit einer bestimmten Ausführungsform beschrieben sind, soweit sinnvoll, auch mit anderen Ausführungsformen kombiniert werden können.

## Patentansprüche

1. Klemm- und/oder Bremsvorrichtung
a) mit einem Gehäuse (3), in welchem zumindest ein ringförmiges, plattenförmiges Element (11) aufgenommen ist, welches sich mit einem ersten Ende (11a) gegenüber einem Anschlagbereich des Gehäuses (3) abstützt und welches mit einem zweiten Ende (11b) Klemm- und/oder Bremskräfte auf ein Objekt (17) überträgt oder ein Beaufschlagungselement (21) beaufschlagt, welches Klemm- und/oder Bremskräfte auf das Objekt (17) überträgt,
b) wobei das zumindest eine ringförmige, plattenförmige Element (11) zumindest einen im Ausgangszustand konvexen Biegebereich aufweist, der so druckfest und dennoch so elastisch biegbar ausgebildet ist, dass der Biegebereich zwischen dem Anschlagbereich des Gehäuses (3) und einem Beaufschlagungsende des ringförmigen, plattenförmigen Elements (11) ein federndes Element bildet,
c) wobei zwischen der konvexen Seite des zumindest einen Biegebereichs des zumindest einen ringförmigen, plattenförmigen Elements (11) und dem Gehäuse (3) ein im Wesentlichen dichter Druckraum (15) ausgebildet ist, der mit dem Überdruck eines dem Gehäuse (3) zuführbaren Druckmediums beaufschlagbar ist, und
d) wobei das zumindest eine ringförmige, plattenförmige Element (11) und dessen zumindest einer Biegebereich so ausgebildet sind, dass bei einer Beaufschlagung des Druckraums (15) mit Überdruck infolge einer Verringerung der Krümmung des Biegebereichs zur Erreichung vorgegebener Klemm- und/oder Bremskräfte eine Bewegung des zweiten Endes (11b) des zumindest einen ringförmigen, plattenförmigen Elements (11) oder eine Bewegung des zweiten Endes (11b) des zumindest einen ringförmigen, plattenförmigen Elements (11) zusammen mit dem Beaufschlagungselement (21) in Richtung auf das Objekt (17) erfolgt oder eine Zunahme der durch das zweite Ende (11b) des zumindest einen ringförmigen, plattenförmigen Elements (11) oder das Beaufschlagungselement (21) auf das Objekt übertragbaren Klemm- und/oder Bremskräfte bewirkt wird,
**dadurch gekennzeichnet,**
e) **dass** das wenigstens eine ringförmige, plattenförmige Element (11) radiale Schlitze (14) aufweist, welche nach innen offen sind, wobei das zweite Ende des ringförmigen, plattenförmigen Elements (11) durch das innere Ende (11b) des ringförmigen, plattenförmigen Elements (11) gebildet ist, oder
f) **dass** das wenigstens eine ringförmige, plattenförmige Element (11) radiale Schlitze aufweist, welche nach außen offen sind, wobei das zweite Ende des ringförmigen, plattenförmigen Elements (11) durch das äußere Ende (11a) des ringförmigen, plattenförmigen Elements (11) gebildet ist, und
g) **dass** an den in Bezug auf den Druckraum (15) inneren und/oder äußeren Oberflächen des wenigstens einen ringförmigen, plattenförmigen Elements (11) zumindest im Bereich der Schlitze (14) ein oder mehrere Dichtelemente (13) vorgesehen sind.

2. Vorrichtung nach Anspruch 1 **dadurch gekennzeichnet, dass** das ringförmige, plattenförmige Element (11) ein Beaufschlagungselement (21) beaufschlagt, welches einstückig mit dem Gehäuse (3) und als Teil des Gehäuses (3) ausgebildet ist oder als ein lösbar mit dem Gehäuse (3) verbundenes Teil, wobei das Beaufschlagungselement (21) derart flexibel ausgebildet ist, dass bei einer Druckbeaufschlagung des Druckraums (15) eine Bewegung wenigstens eines Abschnitts des Beaufschlagungselements (21) in Richtung auf das Objekt (17) erfolgt oder die durch das zumindest eine ringförmige, plattenförmige Element (11) erzeugten übertragbaren Klemm- und/oder Bremskräfte auf das Objekt (17) übertragen werden.

3. Vorrichtung nach einem der Ansprüche 1 oder 2, **dadurch gekennzeichnet, dass** das erste Ende (11a) des zumindest einen ringförmigen, plattenförmigen Elements (11) mit dem Gehäuse (3) verbunden ist.

4. Vorrichtung nach einem der vorhergehenden Ansprüche, **dadurch gekennzeichnet, dass** sich das erste Ende (11a) des zumindest einen ringförmigen, plattenförmigen Elements (11) ohne feste Verbindung gegen das Gehäuse (3) abstützt und bei Vorhandensein eines Beaufschlagungselements (21) sich vorzugsweise auch das zweite Ende (11b) des zumindest einen ring-förmigen, plattenförmigen Elements (11) ohne feste Verbindung gegen das Beaufschlagungselement (21) abstützt.

5. Vorrichtung nach einem der vorhergehenden Ansprüche, **dadurch gekennzeichnet, dass** das zumindest eine ringförmige, plattenförmige Element (11) kreisringförmig ausgebildet ist.

6. Vorrichtung nach einem der vorhergehenden Ansprüche, **dadurch gekennzeichnet, dass** das ringförmige, plattenförmige Element (11) im Ausgangszustand über im Wesentlichen den gesamten radialen Querschnitt konvex ausgebildet ist, wobei im Wesentlichen die gesamte ringförmige Wandung des ringförmigen, plattenförmigen Elements (11) als Biegebereich dient.

7. Vorrichtung nach einem der vorhergehenden Ansprüche, **dadurch gekennzeichnet, dass** das eine oder die mehreren Dichtelemente (13) in Form einer flexiblen Schicht auf einem Teil oder auf der gesamten Oberfläche des ringförmigen, plattenförmigen Elements (11) vorgesehen sind.

8. Vorrichtung nach einem der vorhergehenden Ansprüche, **dadurch gekennzeichnet, dass** die Biegung des zumindest einen Biegebereichs des zumindest einen ringförmigen, plattenförmigen Elements (11) derart begrenzt ist, dass nach einem Wegfall der Beaufschlagung des Druckraums (15) mit Überdruck infolge der federnden Wirkung des zumindest einen Biegebereichs dieser in den Ausgangszustand zurück bewegt wird.

9. Vorrichtung nach einem der vorhergehenden Ansprüche, **dadurch gekennzeichnet, dass** mehrere ringförmige, plattenförmige Elemente (11) vorgesehen sind, deren zweite Enden (11b) einen vorbestimmten Abstand aufweisen, um über einen vorgegebenen ausgedehnten Bereich Klemm- und/oder Bremskräfte auf das Objekt (17) zu übertragen, wobei für jedes ringförmige, plattenförmige Element (11) ein separater Druckraum oder für jeweils mehrere oder alle ringförmigen, plattenförmigen Elemente (11) ein gemeinsamer Druckraum (15) ausgebildet ist.

10. Vorrichtung nach einem der vorhergehenden Ansprüche, **dadurch gekennzeichnet, dass** wenigstens ein Paar ringförmiger, plattenförmiger Elemente (11) vorgesehen ist, deren erste (11a) und zweite Enden (11b) unmittelbar benachbart oder eng beabstandet sind und deren konvexe Biegebereiche jeweils konvex nach außen bezogen auf das jeweils andere ringförmige, plattenförmige Element (11) des Paares ringförmiger, plattenförmiger Elemente (11) verlaufen, wobei ein gemeinsamer Druckraum (15) zur Beaufschlagung der Biegebereiche der beiden ringförmigen, plattenförmigen Elemente (11) eines Paares vorgesehen ist.

11. Vorrichtung nach Anspruch 10, **dadurch gekennzeichnet, dass** die ringförmigen, plattenförmigen Elemente (11) so ausgebildet sind, dass sie in einem Endzustand bei Beaufschlagung mit einem Überdruck, der größer oder gleiche einem vorgegebenen Maximaldruck ist, mit wenigstens einem Teilbereich der einander zugewandten Seiten aneinander anliegen, wobei der Endzustand durch eine geeignete Ausbildung der Biegebereiche so definiert ist, dass aus dem Endzustand eine selbsttätige Rückkehr in den drucklosen Ausgangszustand erfolgt.

12. Vorrichtung nach einem der Ansprüche 9 bis 11, **dadurch gekennzeichnet, dass** ein Beaufschlagungselement (21) vorgesehen ist, welches im gesamten Bereich, in dem die mehreren ringförmigen, plattenförmigen Elemente (11) angreifen, starr ausgebildet ist.

## Claims

1. Clamping and/or braking device
a) with a housing (3), in which at least one ring-shaped, plate-shaped element (11) is held, which element is supported with a first end (11a) with respect to a stop area of the housing (3) and which with a second end (11b) transmits clamping and/or braking forces to an object (17) or a pressurisable element (21), which transmits clamping and/or braking forces to the object (17),
b) wherein the at least one ring-shaped, plate-shaped element (11) has at least one bending area which is convex in the initial state and is formed so as to be pressure-resistant and yet elastically bendable so that the bending area forms a resilient element between the stop area of the housing (3) and a pressurisable end of the ring-shaped, plate-shaped element (11),
c) wherein a substantially tight pressure space (15) is formed between the convex side of the at least one bending area of the at least one ring-shaped, plate-shaped element (11) and the housing (3), which space can be acted upon by the excess pressure of a pressure medium which can be supplied to the housing (3), and
d) wherein the at least one ring-shaped, plate-shaped element (11) and its at least one bending area are formed so that, when the pressure space (15) is acted upon by excess pressure, as a result of a reduction of the curvature of the bending area, in order to obtain predetermined clamping and/or braking forces, a movement of the second end (11b) of the at least one ring-shaped, plate-shaped element (11) or a movement of the second end (11b) of the at least one ring-shaped, plate-shaped element (11) together with the pressurisable element (21) takes place in the direction of the object (17) or an increase in the clamping and/or braking forces transmissible to the object by the second end (11b) of the at least one ring-shaped, plate-shaped element (11) or the pressurisable element (21) is brought about,
**characterised in**
e) **that** the at least one ring-shaped, plate-shaped element (11) has radial slots (14) which are open inwards, wherein the second end of the ring-shaped, plate-shaped element (11) is formed by the inner end (11b) of the ring-shaped, plate-shaped element (11), or
f) **that** the at least one ring-shaped, plate-shaped element (11) has radial slots which are open outwards, wherein the second end of the ring-shaped, plate-shaped element (11) is formed by the outer end (11a) of the ring-shaped, plate-shaped element (11), and
g) **that** one or a plurality of sealing element(s) (13) is/are provided at the inner and/or outer surfaces, in relation to the pressure space (15), of the at least one ring-shaped, plate-shaped element (11), at least in the area of the slots (14).

2. Device according to Claim 1, **characterised in that** the ring-shaped, plate-shaped element (11) acts on a pressurisable element (21), which is formed in one piece with the housing (3) and as part of the housing (3) or as a part connected to the housing (3) in a detachable manner, wherein the pressurisable element (21) is formed in a flexible manner such that, when the pressure space (15) is pressurised, a movement at least of one portion of the pressurisable element (21) takes place in the direction of the object (17) or the transmissible clamping and/or braking forces produced by the at least one ring-shaped, plate-shaped element (11) are transmitted to the object (17).

3. Device according to either of Claims 1 and 2, **characterised in that** the first end (11a) of the at least one ring-shaped, plate-shaped element (11) is connected to the housing (3).

4. Device according to any one of the preceding Claims, **characterised in that** the first end (11a) of the at least one ring-shaped, plate-shaped element (11) is supported without a firm connection against the housing (3) and, with the presence of a pressurisable element (21), the second end (11b) of the at least one ring-shaped, plate-shaped element (11) is preferably also supported without a firm connection against the pressurisable element (21).

5. Device according to any one of the preceding Claims, **characterised in that** the at least one ring-shaped, plate-shaped element (11) is formed in the shape of a circular ring.

6. Device according to any one of the preceding Claims, **characterised in that** the ring-shaped, plate-shaped element (11) is formed so as to be convex over substantially the entire radial cross section in the initial state, wherein substantially the entire ring-shaped wall of the ring-shaped, plate-shaped element (11) serves as a bending area.

7. Device according to any one of the preceding Claims, **characterised in that** the one or the plurality of sealing element(s) (13) is/are provided in the form of a flexible layer on a part or on the entire surface of the ring-shaped, plate-shaped element (11).

8. Device according to any one of the preceding Claims, **characterised in that** the bending of the at least one bending area of the at least one ring-shaped, plate-shaped element (11) is limited such that, after discontinuation of the action on the pressure space (15) by excess pressure, as a result of the resilient action of the at least one bending area, this is moved back into the initial state.

9. Device according to any one of the preceding Claims, **characterised in that** a plurality of ring-shaped, plate-shaped elements (11) are provided, the second ends (11b) of which elements have a predetermined spacing in order to transmit clamping and/or braking forces to the object (17) over a predetermined extensive area, wherein a separate pressure space is formed for each ring-shaped, plate-shaped element (11) or a common pressure space (15) is formed for a respective plurality of or all ring-shaped, plate-shaped elements (11).

10. Device according to any one of the preceding Claims, **characterised in that** at least one pair of ring-shaped, plate-shaped elements (11) is provided, the first (11a) and second ends (11b) of which are directly adjacent or at a close spacing from one another and the convex bending areas of which in each case extend convexly outwards, related to the respective other ring-shaped, plate-shaped element (11) of the pair, wherein a common pressure space (15) is provided for acting on the bending areas of the two ring-shaped, plate-shaped elements (11) of a pair.

11. Device according to Claim 10, **characterised in that** the ring-shaped, plate-shaped elements (11) are formed so that, in a final state, when they are acted upon by an excess pressure which is greater than or equal to a predetermined maximum pressure, they lie against one another with at least a partial area of the facing sides, wherein the final state is defined by a suitable formation of the bending areas so that an automatic return from the final state to the pressureless initial state takes place.

12. Device according to any one of Claims 9 to 11, **characterised in that** a pressurisable element (21) is provided which is formed so as to be rigid in the entire area in which the plurality of ring-shaped, plate-shaped elements (11) act.

## Revendications

1. Dispositif de serrage et/ou de frein,
a) comprenant un boîtier (3) dans lequel est reçu au moins un élément annulaire (11) en forme de plateau, dont une première extrémité (11a) prend appui sur une zone de butée du boîtier (3), et dont une deuxième extrémité (11b) transmet des forces de serrage et/ou de freinage à un objet (17) ou un élément récepteur (21) qui transmet des forces de serrage et/ou de freinage à l'objet (17),
b) ledit au moins un élément annulaire (11) en forme de plateau présentant au moins une zone de flexion convexe à l'état initial, qui est configurée de façon résistant à la pression tout en étant élastiquement flexible, de manière telle que la zone de flexion forme un élément faisant ressort entre la zone de butée du boîtier (3) et une extrémité d'application des forces de l'élément annulaire (11) en forme de plateau,
c) une chambre de pression (15) essentiellement étanche étant formée entre le côté convexe de ladite au moins une zone de flexion dudit au moins un élément annulaire (11) en forme de plateau et le boîtier (3), la chambre pouvant être soumise à la surpression d'un fluide sous pression pouvant être introduit dans le boîtier (3), et
d) ledit au moins un élément annulaire (11) en forme de plateau ainsi que ladite au moins une zone de flexion de celui-ci étant configurés de manière telle qu'en cas de mise sous pression de la chambre de pression (15) avec une surpression, entraînant à une diminution de la courbure de la zone de flexion, de manière à atteindre des forces de serrage et/ou de freinage prédéterminées, il se produise un déplacement de la deuxième extrémité (11b) dudit au moins un élément annulaire (11) en forme de plateau, voire un déplacement de la deuxième extrémité (11b) dudit au moins un élément annulaire (11) en forme de plateau conjointement avec l'élément (21) d'application des forces, en direction de l'objet (17), ou une augmentation des forces de serrage et/ou de freinage transmises à l'objet par la deuxième extrémité (11b) dudit au moins un élément annulaire (11) en forme de plateau ou par l'élément (21) d'application des forces,
**caractérisé en ce**
e) **que** ledit au moins un élément annulaire (11) en forme de plateau comporte des fentes radiales (14) ouvertes vers l'intérieur, la deuxième extrémité de l'élément annulaire (11) en forme de plateau étant constituée par l'extrémité intérieure (11b) de l'élément annulaire (11) en forme de plateau, ou en ce
f) **que** ledit au moins un élément annulaire (11) en forme de plateau comporte des fentes radiales ouvertes vers l'extérieur, la deuxième extrémité de l'élément annulaire (11) en forme de plateau étant constituée par l'extrémité extérieure (11a) de l'élément annulaire (11) en forme de plateau, et
g) **qu'**au moins dans la région des fentes (14), un ou plusieurs élément(s) d'étanchéité (13) est/sont prévu(s) aux surfaces intérieure et/ou extérieure, vues par rapport à la chambre de pression (15), dudit au moins un élément annulaire (11) en forme de plateau.

2. Dispositif selon la revendication 1 **caractérisé en ce que** l'élément annulaire (11) en forme de plateau agit sur un élément (21) d'application des forces, qui est formé d'un seul tenant avec le boîtier (3) et fait partie du boîtier (3), ou est monté de façon démontable sur le boîtier (3), l'élément (21) d'application des forces étant conçu pour être flexible de manière telle qu'en cas d'application d'une pression à la chambre de pression (15), un déplacement d'au moins une partie de l'élément (21) d'application des forces en direction de l'objet (17) se produise, ou que les forces de serrage et/ou de freinage qui peuvent être transmises, produites par ledit au moins un élément annulaire (11) en forme de plateau, soient transmises à l'objet (17).

3. Dispositif selon l'une des revendications 1 ou 2, **caractérisé en ce que** la première extrémité (11a) dudit au moins un élément annulaire (11) en forme de plateau est reliée au boîtier (3).

4. Dispositif selon l'une des revendications précédentes, **caractérisé en ce que** la première extrémité (11a) dudit au moins un élément annulaire (11) en forme de plateau s'appuie sur le boîtier (3) sans liaison fixe, et qu'en cas de présence d'un élément d'application des forces (21), la deuxième extrémité (11b) dudit au moins un élément annulaire (11) en forme de plateau s'appuie à son tour sur l'élément (21) d'application des forces, sans liaison fixe.

5. Dispositif selon l'une des revendications précédentes, **caractérisé en ce que** ledit au moins un élément annulaire (11) en forme de plateau est configuré en forme d'anneau de cercle.

6. Dispositif selon l'une des revendications précédentes, **caractérisé en ce qu'**à l'état initial, ledit au moins un élément annulaire (11) en forme de plateau est réalisé de façon convexe sur essentiellement toute sa section transversale radiale, essentiellement toute la paroi annulaire de l'élément annulaire (11) en forme de plateau servant alors de zone de flexion.

7. Dispositif selon l'une des revendications précédentes, **caractérisé en ce que** ledit un ou lesdits plusieurs élément(s) d'étanchéité (13) est/sont prévu(s) sous forme d'une couche flexible déposée sur une partie de, ou sur toute la surface de l'élément annulaire (11) en forme de plateau.

8. Dispositif selon l'une des revendications précédentes, **caractérisé en ce que** la courbure de ladite au moins une zone de flexion dudit au moins un élément annulaire (11) en forme de plateau est limitée de façon telle qu'après la disparition de l'application de la surpression de la chambre de pression (15), ladite au moins une zone de flexion retourne dans son état initial sous l'effet de ressort de cette zone.

9. Dispositif selon l'une des revendications précédentes, **caractérisé en ce que** plusieurs éléments annulaires (11) en forme de plateau sont prévus, dont les secondes extrémités (11b) présentent un espacement prédéterminé, de manière à transmettre des forces de serrage et/ou de freinage à l'objet (17) sur une plage prédéterminée étendue, une chambre de pression séparée étant prévue pour chaque élément annulaire (11) en forme de plateau, ou une chambre de pression (15) commune étant prévue pour plusieurs, voire pour tous les éléments annulaires (11) en forme de plateau.

10. Dispositif selon l'une des revendications précédentes, **caractérisé en ce qu'**au moins une paire d'éléments annulaires (11) en forme de plateau est prévue, dont les premières (11a) et deuxièmes (11b) extrémités sont contiguës ou sont étroitement espacées l'une de l'autre, et que leurs zones de flexion convexes s'étendent respectivement de façon convexe vers l'extérieur, par rapport à l'autre élément annulaire (11) en forme de plateau de la paire, une chambre de pression (15) commune étant prévue pour agir sur les zones de flexion des deux éléments annulaires (11) en forme de plateau d'une paire.

11. Dispositif selon la revendication 10, **caractérisé en ce que** les éléments annulaires (11) en forme de plateau sont configurés de manière telle que, dans un état final, en cas d'exposition à une surpression qui est égale ou supérieure à une pression maximale prédéterminée, ils soient jointifs sur une partie au moins de leurs surfaces opposées, l'état final étant défini, grâce à une configuration appropriée des zones de flexion, de manière telle qu'un retour vers l'état initial hors pression puisse s'effectuer automatiquement depuis cet état final.

12. Dispositif selon l'une des revendications 9 à 11, **caractérisé en ce qu'**un élément (21) d'application des forces est prévu, qui est de configuration rigide dans toute la zone dans laquelle viennent s'appuyer lesdits plusieurs éléments annulaires (11) en forme de plateau.
